(19) Europäisches Patentamt
European Patent Office
Office européen des brevets

(11) **EP 3 481 601 B1**

(12) **FASCICULE DE BREVET EUROPEEN**

(45) Date de publication et mention
de la délivrance du brevet:
**09.03.2022 Bulletin 2022/10**

(21) Numéro de dépôt: **17725622.9**

(22) Date de dépôt: **29.05.2017**

(51) Classification Internationale des Brevets (IPC):
**B25J 9/10** *(2006.01)*   **B25J 15/00** *(2006.01)*
**B64F 5/00** *(2017.01)*

(52) Classification Coopérative des Brevets (CPC):
**B25J 11/005; B23Q 3/069; B25J 9/1015;**
**B25J 15/0095; B64F 5/10;** B23Q 2220/006

(86) Numéro de dépôt international:
**PCT/EP2017/062849**

(87) Numéro de publication internationale:
**WO 2018/007067 (11.01.2018 Gazette 2018/02)**

(54) **ENSEMBLE POUR USINAGE D'UNE SURFACE, COMPRENANT UN EFFECTEUR, DESTINE A ÊTRE MONTE SUR UN BRAS DE ROBOT, ET AU MOINS UN ELEMENT D'APPUI DE L'EFFECTEUR SUR LA SURFACE ET/OU SUR L'OUTILLAGE AVEC LIAISON ROTULE ENTRE EUX**

OBERFLÄCHENBEARBEITUNGSANORDNUNG MIT EINEM ENDEFFEKTOR ZUR MONTAGE AN EINEM ROBOTERARM UND MINDESTENS EINEM EFFEKTORLAGERELEMENT, MIT DEM DER EFFEKTOR AUF DER OBERFLÄCHE UND/ODER AUF DEN WERKZEUGEN MIT EINEM DAZWISCHEN VORGESEHENEN KUGELGELENK AUFLIEGT

SURFACE-MACHINING ASSEMBLY COMPRISING AN EFFECTOR TO BE MOUNTED ON A ROBOT ARM AND AT LEAST ONE EFFECTOR BEARING ELEMENT BY MEANS OF WHICH THE EFFECTOR BEARS ON THE SURFACE AND/OR ON THE TOOLS WITH A BALL JOINT PROVIDED THEREBETWEEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2016 FR 1656613**

(43) Date de publication de la demande:
**15.05.2019 Bulletin 2019/20**

(73) Titulaire: **Le Creneau Industriel**
**74940 Annecy-le-Vieux (FR)**

(72) Inventeurs:
• **AUFFRET, Alain**
**74250 Peillonnex (FR)**
• **BASTIEN, Cédric**
**74490 Saint-Jeoire-en-Faucigny (FR)**

(74) Mandataire: **Nony**
**11 rue Saint-Georges**
**75009 Paris (FR)**

(56) Documents cités:
DE-A1-102009 054 604    DE-U1-202013 104 389
US-A- 2 866 367    US-A- 4 523 100

EP 3 481 601 B1

**Description**

Domaine technique

La présente invention concerne le domaine général de l'usinage de pièces de matériaux divers et variés, au moyen d'un outil de coupe. L'usinage peut être un fraisage, perçage ou tout autre procédé d'enlèvement de matière.

L'invention vise à améliorer l'usinage avec un outil de coupe afin qu'il suive une trajectoire dans l'espace avec une grande précision, et une stabilité telle que sa trajectoire ne soit pas modifiée de façon significative par les efforts d'usinage qui lui sont appliqués, et qui résultent de l'opération d'usinage.

Les applications industrielles concernées par l'invention, sont nombreuses. Il s'agit principalement des applications où l'usinage à réaliser sur la pièce, peut être considéré comme une succession d'usinages locaux, situés avec précision dans un repère de celle-ci.

Parmi les applications nombreuses on peut citer les suivantes.

Tout d'abord, dans le domaine de l'aéronautique, il peut s'agir d'un usinage d'alésages spécifiques destinés à des fixations, comme des perçages à l'emplanture d'une voilure d'un nouvel avion, dans sa liaison avec le fuselage, les perçages à réaliser devant être cylindriques et/ou coniques, à forts diamètres dans des épaisseurs importantes de matériaux et/ou dans des empilages multi-matériaux, typiquement un empilage de carbone/titane/aluminium.

Il peut s'agir également d'un surfaçage en forme, de panneaux en matériau composite de fuselage ou voilure d'un avion déjà en service qui nécessitent une réparation suite à un impact en service. Le surfaçage peut alors consister à créer des formes de pyramide ou encore de gradins dits étagés pour éliminer la zone de panneau(x) détériorée par l'impact.

La réalisation d'usinage de précision sur des moules et des pièces de formes complexes peut aussi être avantageusement concernée. Il peut s'agir ainsi de la réalisation d'outillages de moulage de pneumatiques, dont la finalité est la gravure de la structure et des inscriptions d'identification du pneu.

Il peut s'agir également de l'usinage de formes complexes, habituellement réalisé sur une Machine-Outil à Commande Numérique (MOCN), à cinq voire six axes, de parties d'une turbomachine, telles qu'un turboréacteur, l'usinage à des fins de réparations de cordons de soudure, de plusieurs usinages raccordés entre eux en séquences d'usinage qui s'enchaînent automatiquement.

Dans le domaine de détourage de pièces, l'ensemble selon l'invention peut permettre de décomposer un contour de détourage en une succession d'éléments de contours locaux, raccordés entre eux, en séquences d'usinage qui s'enchaînent automatiquement.

Dans le domaine du fraisage de précision sur des pièces de grandes dimensions, l'ensemble selon l'invention peut réaliser des fraisages de petites dimensions décomposés en une succession d'éléments de fraisage locaux, raccordés entre eux en séquences d'usinage qui s'enchaînent automatiquement.

Dans le domaine du parachèvement de pièces, il peut s'agir d'ébavurages et de cassages d'angles de haute précision sur des pièces de formes. L'ensemble selon l'invention peut réaliser des ébavurages raccordés, entre eux en séquences d'usinage qui s'enchaînent automatiquement.

On précise ici que les trois axes de translation X, Y, Z dont il est fait référence dans l'ensemble de la demande sont ceux d'un trièdre de référence définis selon la norme relatives aux machines à commande numérique AFNOR NF Z 60-020CN.

Les axes A, B, C de rotation désignent les mouvements de rotation effectuées respectivement autour d'axes parallèles à X, Y et Z.

On précise également que par « axes interpolés », on entend dans le cadre de l'invention, la définition usuelle donnée pour un usinage par interpolation qui consiste à usiner une pièce grâce à l'interaction des axes moteurs. Lors de ce type d'usinage, les axes sont nécessairement non indépendants ou reliés.

Art antérieur

Dans le domaine de l'usinage de surface d'une pièce on peut classer en trois grandes catégories, les équipements qui sont actuellement mis en œuvre : des unités de perçage qui peuvent être déplacés et utilisées manuellement par un opérateur, les machines-outils et enfin, les robots industriels.

Les unités de perçage sont couramment mises en œuvre dans l'industrie aéronautique pour réaliser des perçages dans des pièces d'avion en cours d'assemblage. Elles sont mises en place sur la pièce concernée et verrouillées par un opérateur, sur des grilles de perçage, dans des logements prévus à cet effet. Une fois l'unité de perçage verrouillée en position, l'opérateur déclenche le cycle d'usinage-perçage qui se déroule automatiquement, puis celui-ci terminé, il déplace l'unité à l'emplacement suivant, et ainsi de suite.

Les applications manuelles connues des unités de perçage sont donc très limitées. En imaginant une application qui irait au-delà, c'est à dire qui consisterait à faire déplacer par l'opérateur une petite machine d'usinage (MOCN à cinq 5 axes) celle-ci présenterait nécessairement des courses d'amplitude très réduite, et donc ne pourrait couvrir des applications dans lesquelles l'usinage requière justement une amplitude importante.

Une machine-outil, et à fortiori une machine spéciale, est techniquement capable de réaliser les opérations d'usinage d'amplitude importante. Mais, les inconvénients d'une machine-outil sont nombreux. Elle est souvent très encombrante et peu flexible d'utilisation, car elle est en général dédiée uniquement pour une application pour laquelle elle a été conçue et ne peut donc pas être facilement réutilisée pour une autre application. Par ailleurs, l'investissement financier nécessaire à l'acquisition d'une machine-outil est important, avec un fort risque de non rentabilité en cas d'évolution défavorable de la charge de production.

Les robots peuvent avoir l'extrémité lire de leur bras articulé directement accouplée à une électrobroche elle-même accouplée à un outil de coupe qu'elle entraîne en rotation afin de réaliser des opérations d'usinage de pièces de forme complexe. L'outil de coupe, qui peut être un outil de perçage ou une broche de fraisage est alors porté par l'axe terminal du robot, que l'on désigne usuellement comme étant l'axe 6.

L'usinage de formes complexes au moyen d'un robot équipé directement sur son axe 6 d'une électrobroche entraînant un outil de coupe, pose principalement les problèmes techniques suivants:

- la souplesse ou compliance du bras du robot, de valeur généralement supérieure à 0,03mm/daN, mesurée à la pointe de l'outil, limite grandement les performances d'usinage du fait des débits de copeaux, si l'on veut éviter les problèmes d'instabilité que sont les écarts de trajectoire induits par les efforts de coupe, et les états de surface des pièces dus aux vibrations en cours d'usinage ;
- la précision d'exécution des trajectoires, de l'ordre de quelques dixièmes de mm pour une trajectoire exécutée à vide, c'est à dire sans charge à l'outil de coupe et qui est donc représentatif d'une passe de finition très légère, est souvent incompatible avec les tolérances géométriques d'usinage des pièces.

Le robot peut aussi être équipé d'un porte-outil, appelé usuellement effecteur qui constitue pour lui une petite machine d'usinage légère, qu'il transporte et positionne aux différents points de la pièce à usiner.

Pour surmonter les difficultés liées aux problèmes techniques des robots équipés directement d'électrobroches en extrémité de bras, comme détaillé ci-dessus, les effecteurs équipant les robots d'usinage, sont conçus pour venir s'appuyer sur la pièce ou sur l'outillage qui la supporte, de façon à recréer une rigidité locale, et obtenir de meilleures performances d'usinage, les trajectoires d'usinage étant exécutées par les axes à commande numérique (CN) de l'effecteur, relativement à cet appui.

Les effecteurs d'usinage sont des effecteurs se limitant généralement à trois axes CN, avec des courses très limitées, de l'ordre de quelques mm.

La demande de brevet US 2014/0227055 décrit un tel robot avec effecteur permettant l'exécution d'alésages par fraisage en trois axes CN interpolés, avec des faibles courses de 5 mm en X et Y.

Cette limitation à trois axes CN interpolés est liée au fait que, jusqu'à présent, le développement d'un effecteur à cinq axes interpolés par une commande numérique capable de courses relativement significatives pour chaque axe qui permettrait le fraisage de formes complexes, se heurte aux difficultés suivantes:

- imprécision due au poids de l'effecteur rendant son transport très délicat pour le robot, avec la possibilité d'une déformation de son bras dégradant de fait la précision du robot ;
- coût d'investissement, puisque l'effecteur doit être conçu comme une machine à cinq axes CN, c'est-à-dire l'adjonction de deux axes de rotation C et A (ou A et B, en sus des trois axes de translation linéaires X, Y et Z.

Du fait de ces difficultés, il est préféré une solution de machine-outil à cinq axes CN, déjà évoquée ci-dessus, qui présente certes l'avantage d'avoir les courses adaptées pour couvrir le volume complet d'une pièce à usiner, avec une meilleure précision et une meilleure productivité mais avec les inconvénients incontournables de sa destination pour une seule application et de coût d'investissement financier.

Il est par ailleurs connu dans l'état de l'art des effecteurs particuliers, appelés hexapodes, qui porte une électrobroche et qui est transportée par le robot pour être placé par celui-ci de la même façon, en appui sur la pièce ou sur l'outillage, afin d'obtenir la rigidité nécessaire au process d'usinage. On peut citer l'hexapode commercialisé sous la dénomination « CMW 380 » au nom de la société française ERIL.

Mais, si de par sa légèreté et sa rigidité intrinsèque un effecteur-hexapode pourrait constituer une réponse technique adaptée au problème d'usinage de formes complexes, sa maturité technique et industrielle n'est pas encore éprouvée à ce jour.

La demande de brevet DE 10 2009 054604 divulgue un dispositif destiné à couper partiellement une pièce à usiner agencée sur une surface de travail et un châssis comportant un dispositif de coupe. Le châssis comprend au moins trois pieds pour s'appuyer sur la surface de travail ainsi qu'au moins un dispositif de mesure de la position du châssis par rapport à la surface de travail.

En résumé, si dans l'art antérieur, on trouve déjà des solutions qui permettent de réaliser l'usinage de formes complexes, les inconvénients propres à chaque solution subsistent.

Il existe donc un besoin de proposer une nouvelle solution d'usinage de formes complexes, notamment afin de s'affranchir des inconvénients précités des unités d'usinage manuelle, des machines-outils à commande numérique et des robots à effecteurs connus.

Le but de l'invention est de répondre au moins en partie à ce besoin.

Exposé de l'invention

Pour ce faire, l'invention concerne un ensemble d'usinage d'une surface, comprenant :

- un effecteur comprenant :

  • une électro-broche comprenant un corps avec à l'une de ses extrémités des moyens d'accouplement à un outil de coupe,
  • un premier support relié au corps de l'électrobroche par une liaison glissière autorisant une translation de l'électrobroche selon l'axe Z de rotation de l'outil,
  • un deuxième support relié au premier support par une liaison glissière autorisant une translation du premier support selon un axe X perpendiculaire à l'axe Z de rotation de l'outil,
  • un châssis dont l'une de ses extrémités constitue un pied et l'autre de ses extrémité constitue une tête adaptée pour être accouplée à l'extrémité libre d'un bras de robot, le châssis étant relié au deuxième support par une liaison glissière autorisant une translation du deuxième support selon un axe Y perpendiculaire à la fois à l'axe X de translation du premier support et à l'axe Z de translation de l'électrobroche et de rotation de l'outil ;

- au moins un élément d'appui du pied de l'effecteur sur la surface à usiner ou sur un outillage qui supporte la surface, l'élément d'appui et le pied de l'effecteur étant configurés de telle sorte que l'effecteur est relié à la surface à usiner par une liaison rotule lorsque le pied de l'effecteur est en appui.

Selon un premier mode de réalisation, l'extrémité du pied de l'effecteur est constituée d'une rotule montée à l'intérieur d'une pièce en définissant entre elles la liaison rotule, la pièce définissant une liaison d'appui contre la surface à usiner ou contre l'outillage. Cette liaison d'appui est un appui-plan, lorsque la surface à usiner ou de l'outillage est plane. Lorsque la surface à usiner ou celle de l'outillage est une surface gauche (au sens mathématiques du terme), la pièce d'appui peut présenter une contre forme de la surface, afin de ne pas avoir un contact ponctuel et ainsi augmenter la surface de contact, favorable à la reprise des efforts de coupe. Selon ce premier mode, afin d'éliminer tout risque de glissement entre la pièce d'appui, on veille à ce que l'effort de contact de contact fourni par le robot sur lequel l'effecteur est monté, tienne compte des efforts de coupe et de la position d'usinage.

Ce premier mode par pied à rotule avec appui-plan permet d'obtenir une précision de localisation des usinages réalisés par l'effecteur dans un référentiel de la pièce, meilleure que celle permise par le robot. Cela implique de corriger à chaque position d'usinage, le programme de l'effecteur en tenant compte de la position réelle de celui-ci. Pour ce faire, l'homme de l'art peut mettre en œuvre les types de solutions déjà connus. Parmi ces solutions connues, on peut citer les solutions de mesure par laser de suivi pour repérer la position de l'effecteur dans l'espace, ou encore les solutions de mesure locale par capteur de triangulation supportées par l'effecteur qui ainsi repère par lui-même sa position par rapport à l'outillage ou à la pièce à usiner.

Selon un deuxième mode de réalisation, l'extrémité du pied de l'effecteur est conformée en une calotte sphérique, chaque élément d'appui étant un plot en forme de calotte sphérique, agencé sur la surface à usiner ou contre l'outillage, la forme du plot étant complémentaire de celle à l'extrémité du pied de l'effecteur en définissant la liaison rotule.

Selon un troisième mode de réalisation, l'extrémité du pied de l'effecteur étant conformée en un tronc de cône, chaque élément d'appui étant un plot en forme de calotte sphérique, agencé sur la surface à usiner ou contre l'outillage, la forme du plot étant complémentaire de celle à l'extrémité du pied de l'effecteur en définissant la liaison rotule.

Selon ces deuxième et troisième modes, l'ensemble peut comprendre un ou plusieurs plots réalisé(s) intégralement avec l'outillage autour de la surface à usiner ou alternativement, posés sur la surface à usiner ou sur l'outillage autour qui supporte la surface à usiner. La pluralité de plots peut être avantageusement répartie le long du contour de la surface à usiner. Chaque plot permet de reprendre les efforts de coupe et également de recentrer avec précision le pied de l'effecteur en appui contre le plot.

Cette solution de plots intégrés ou posés sur la surface à usiner ou sur l'outillage permet d'assurer d'une manière simple, la continuité des segments du contour d'usinage. En outre, cette solution de plots permet d'éviter tout risque de glissement éliminé, en cours d'usinage, entre l'appui de l'effecteur et la pièce à usiner.

Comparativement au premier mode avec la rotule intégrée au pied de l'effecteur, cette solution de plots intégrés ou rapportés permet de transmettre plus de puissance de coupe, et donc d'améliorer la productivité de l'usinage.

L'implantation des plots sur l'outillage peut être réalisée sans grande précision: il suffit dans un premier temps de déterminer par une mesure de précision, la position des centres des portées sphériques de chaque plot, pour les intégrer ensuite à la définition de l'outillage sur une station de programmation, et générer dans un second temps le programme d'usinage correspondant.

Dans ce mode avec plots intégrés, l'extrémité du pied de est, de fait, automatiquement recentrée avec précision par rapport à l'outillage. Au niveau de la tête de l'effecteur, et plus précisément à l'interface de la bride d'accouplement de l'extrémité du bras de robot, compte tenu du rapport des bras de levier entre d'une part pointe de l'outil et centre de la liaison rotule, et d'autre part centre de la liaison rotule et bride d'accouplement, les inventeurs pensent que l'imprécision du robot en ce point (tête de l'effecteur) aura une influence tout à fait négligeable sur la position de la pointe de l'outil.

L'amplitude angulaire de la liaison rotule est de préférence comprise entre $\pm$ 10 et $\pm$ 45°, de préférence entre $\pm$ 15 et $\pm$ 25°. Typiquement, elle peut être de l'ordre de $\pm$ 20°.

Avantageusement, le premier support supporte le dispositif d'entraînement en translation selon l'axe Z, le deuxième support supporte le dispositif d'entraînement en translation selon l'axe X, tandis que le châssis supporte le dispositif d'entraînement en translation selon l'axe Y.

De préférence, chaque dispositif d'entraînement en translation est un moteur relié à un système vis-écrou à billes ou à un système de vis à rouleaux satellites. Contrairement à d'autres dispositifs d'entraînement, comme des moteurs linéaires, les dispositifs d'entraînement avec vis-écrou à billes ou vis à rouleaux satellites présentent l'avantage de permettre un équilibrage en permanence plus aisé de leur le poids propre porté par chaque support ou châssis.

L'invention a également pour objet un équipement d'usinage comprenant un robot à six de degré de liberté, dit robot six axes, et un ensemble décrit précédemment, la tête de l'effecteur étant accouplée à l'extrémité libre du bras du robot six axes. Typiquement, la charge à l'outil de coupe transmise par le robot peut être de l'ordre de 100 kg.

L'invention a également pour objet un procédé d'usinage d'une surface, mis en œuvre par l'ensemble décrit précédemment comprenant les étapes suivantes :

a/ mesure du positionnement des centres des portées de chacun d'une pluralité de plots ;

b/ intégration de la pluralité de plots sur l'outillage à mettre autour de la surface à usiner ;

c/ appui du pied d'effecteur sur un des plots puis usinage de la partie de surface à proximité dudit plot, au moyen d'un outil de coupe accouplé à l'électrobroche, l'usinage étant réalisé avec déplacement de l'électrobroche en translation selon l'axe X et/ou Y et/ou Z et/ou avec rotation de l'effecteur autour du centre de la rotule et/ou avec rotation de l'effecteur autour de son axe passant par le centre de la rotule et le centre de la bride de fixation de la tête sur le bras du robot ;

d/ déplacements successifs de l'effecteur au moyen du robot de sorte à réitérer l'étape c/ avec le pied d'effecteur en appui sur chacun de la pluralité des plots, afin de réaliser l'usinage souhaité de toute la surface.

En résumé, l'invention consiste essentiellement en un effecteur d'usinage, destiné à être monté sur un robot à plusieurs degrés de liberté, et dont le montage de l'électrobroche relativement à ses supports intermédiaires et son châssis permet un déplacement selon trois axes X, Y, Z à commande numérique d'un trièdre, l'effecteur s'appuyant sur la pièce à usiner ou sur l'outillage autour, par l'intermédiaire d'une liaison rotule en son extrémité de pied. L'appui de l'effecteur sur la pièce ou sur l'outillage autour, permet de conférer une rigidité locale et une précision nécessaire pour assurer la qualité du process d'usinage.

Ainsi, tout en maintenant le contact sans glissement du pied d'effecteur sur la surface d'appui, l'inclinaison par le robot de l'axe de l'effecteur, en cours de procédé d'usinage, autour du centre de la rotule, génère virtuellement les deux axes de rotation A et B complémentaires aux trois axes de translation X, Y et Z interpolés de l'effecteur, ce qui permet ainsi l'usinage de formes complexes, et ce pour une qualité équivalente à celle qui serait obtenue avec une MOCN traditionnelle à cinq (ou plus) axes numériques, mais qui est bien plus onéreuse en investissement.

De plus, un robot peut orienter à souhait, en cours d'usinage, l'effecteur selon l'invention autour de son axe défini comme étant celui qui passe par le centre de la rotule et le centre de la bride de fixation de la tête de l'effecteur sur le robot. Cela permet de résoudre bien des problèmes de collision qui pourraient se présenter, en cours d'usinage, entre l'effecteur et le robot d'une part, et la pièce à usiner et son outillage d'autre part.

Autrement dit, grâce à l'ensemble selon l'invention, on obtient la rigidité entre la pointe de l'outil de coupe et la surface de la pièce à usiner, indispensable au process d'usinage:

- en translation dans les trois axes X, Y et Z, par la maîtrise du contact sans glissement de l'appui du pied d'effecteur sur la pièce ou sur l'outillage autour,
- en rotation autour des deux axes virtuels A et B, passant par le centre de la rotule, par le fait du rapport des bras de levier d'une part entre la pointe de l'outil de coupe et le centre de rotule et d'autre part entre le centre de la rotule et le centre de la bride de fixation de la tête de l'effecteur sur le bras du robot,

- en rotation autour de l'axe de l'effecteur, par la qualité de certains axes de rotation du robot qui, le cas échéant auront été préalablement révisés notamment par l'utilisation de réducteurs à rattrapage de jeux, ainsi que par des asservissements de raideur et de précision appropriées, ces composants et leurs réglages étant à la portée de l'homme de l'art. La rotation autour de l'axe de l'effecteur permet d'augmenter la capacité d'usinage de l'effecteur et la capacité à usiner des formes complexes.

La solution selon l'invention permet donc d'obtenir un usinage de formes complexes, au moyen d'un effecteur qui ne comporte que trois axes X, Y, Z à commande numérique, quand bien même le robot sur lequel l'effecteur est monté ne présente pas intrinsèquement une rigidité suffisante pour réussir un usinage de bonne qualité.

Autrement dit, le même robot sur lequel l'électrobroche serait directement accouplée avec l'extrémité libre de bras sans l'effecteur selon l'invention, ne pourrait pas réaliser un usinage de bonne qualité.

La succession d'usinages locaux d'une pièce réalisés par un ensemble selon l'invention peut venir en complément d'un usinage de la pièce dans sa globalité au moyen d'une machine-outil usuelle qui est beaucoup plus onéreuse et encombrante.

Les inventeurs pensent que toutes les positions d'usinage de l'outil de coupe par rapport à la pièce à usiner sont possible grâce à l'ensemble selon l'invention : broche horizontale, broche verticale, etc.....

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :

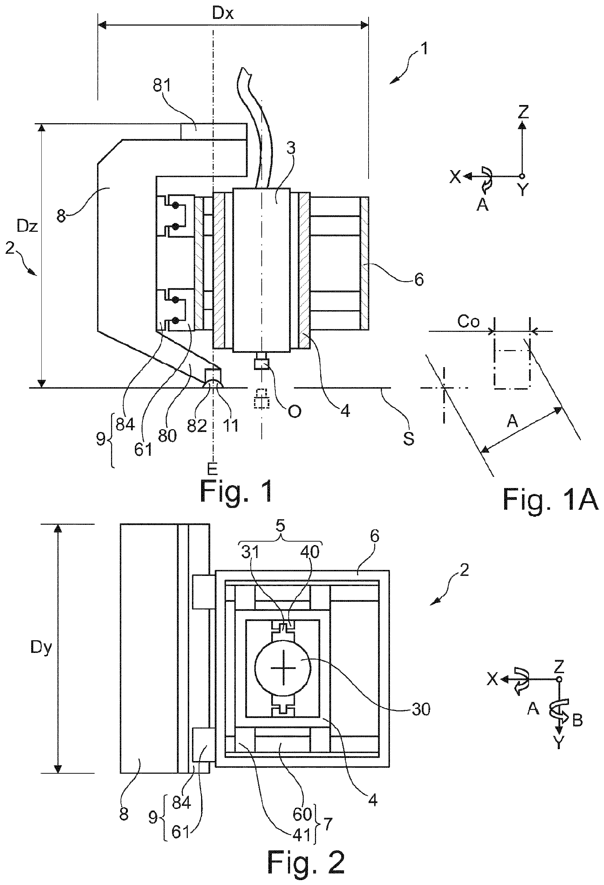

- la figure 1 est une vue schématique en coupe longitudinale partielle d'un effecteur selon l'invention tel qu'il est en appui sur la surface à usiner ou l'outillage qui la supporte ;
- la figure 1A est une vue de détail montrant le débattement possible de l'outil de coupe monté sur l'effecteur ainsi que la position relative par rapport au centre de la liaison rotule conforme à l'invention, à une position donnée de rotation autour de l'axe Z ;
- la figure 2 est une vue schématique de dessus de l'effecteur selon la figure 1 ;
- la figure 3 est une vue de détail en coupe partielle de l'extrémité d'un pied à rotule de l'effecteur selon un premier mode de réalisation de l'invention;
- la figure 4 est une schématique en perspective de l'extrémité d'un de l'effecteur, destiné à venir en appui successivement contre une série de plots intégrés à l'outillage d'une surface à usiner, en définissant une liaison rotule selon un deuxième mode de réalisation de l'invention;
- la figure 5 est une vue schématique en perspective illustrant une variante de réalisation du pied de l'effecteur.

On précise ici dans l'ensemble de la présente demande, les termes « inférieur », « supérieur », « dessus », « dessous », « intérieur », « extérieur », « « interne » « externe» sont à comprendre par référence à un effecteur selon l'invention avec son châssis et l'outil de coupe qu'il supporte agencé sur le dessus de la surface S à usiner.

L'ensemble selon l'invention globalement désigné par la référence 1, comprend tout d'abord un effecteur 2.

L'effecteur comprend tout d'abord une électrobroche d'usinage 3 dont le corps 30 comprend à l'une de ses extrémités des moyens d'accouplement à un outil de coupe O.

A titre d'exemple indicatif, l'électrobroche d'usinage 3 peut avoir les caractéristiques suivantes :

- diamètre de 80mm,
- puissance nominale de 7kW,
- vitesse de rotation nominale de 25000 tr/mn,
- couple nominal de sortie de 5mN,

Il peut s'agir également d'une électrobroche de diamètre 150mm, de puissance nominale de 11kW, de vitesse de rotation nominale de 12000 tr/mn, et de couple nominale de l'ordre de 10 mN.

L'effecteur 2 comprend également un premier support 4 relié au corps 30 de l'électroche par une liaison glissière 5 autorisant une translation de l'électrobroche selon l'axe Z de rotation de l'outil de coupe O. Comme dans l'exemple illustré, cette liaison glissière 5 peut être réalisée au moyen de deux profilés 31 de type mâle, solidaires du corps 30 de l'électrobroche et coopérant chacun avec un profilé 40 de type femelle solidaire du premier support 4.

Un deuxième support 6 est relié au premier support 4 également par une liaison glissière 7 autorisant une translation du premier support 4 selon un axe X perpendiculaire à l'axe Z de rotation de l'outil. Comme dans l'exemple illustré, cette liaison glissière 7 peut être réalisée au moyen de deux profilés 60 de type mâle, solidaires du deuxième support 6 et coopérant chacun avec un profilé 41 de type femelle solidaire du premier support 4.

Enfin, l'effecteur 2 comprend un châssis 8 de forme générale en U ou en C. L'une des extrémités du châssis 8 constitue un pied 80 et l'autre de ses extrémités constitue une tête 81 adaptée pour être accouplée à l'extrémité libre d'un bras de robot poly-articulé, notamment un robot six axes non représenté.

Le châssis 8 est relié au deuxième support 6 par une liaison glissière (9) autorisant une translation du deuxième support selon un axe Y perpendiculaire à la fois à l'axe X de translation du premier support et à l'axe Z de translation de l'électrobroche et de rotation de l'outil. Comme dans l'exemple illustré, cette liaison glissière 9 peut être réalisée au moyen de deux profilés 84 de type mâle, solidaires du châssis et coopérant chacun avec un profilé 61 de type femelle solidaire du deuxième support 6.

Chacun des profilés pour réaliser les différentes liaisons glissières 5, 7 et 9 peuvent par exemple être réalisés intégralement ou soudés ou collés ou vissés sur les composants.

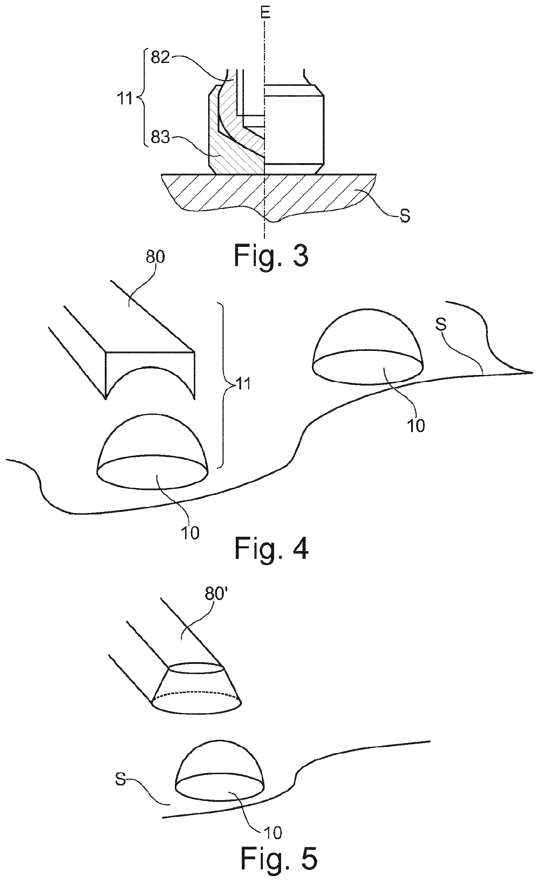

Selon un premier mode de réalisation illustré en figure 3, l'extrémité du pied 80 comprend une rotule 82 montée à l'intérieur d'une pièce d'appui-plan 83, en définissant entre eux une liaison rotule. Ainsi, grâce au pied à rotule 82 en série avec la pièce d'appui-plan 83, l'effecteur 2 est relié à la surface à usiner par une liaison rotule 11 lorsque le pied de l'effecteur est en appui.

Selon un deuxième mode de réalisation illustré en figure 4, l'extrémité du pied 80 est conformée en une calotte sphérique qui est complémentaire à celle d'une série de plots 10 intégrés ou rapportés le long de la surface S à usiner, ou de préférence sur l'outillage qui la supporte. Ainsi, le pied 80 de l'effecteur en appui contre un des plots 10 définit avec celui-ci la liaison rotule 11 selon l'invention.

L'ensemble selon l'invention 1 permet un déplacement de l'effecteur 2 selon les trois axes linéaires X, Y, Z interpolés avec deux axes rotatifs A et B, obtenus grâce aux mouvements du robot faisant pivoter l'effecteur autour du centre de la rotule 11, complétés par les déplacements temps réel des axes linéaires, de façon à obtenir un positionnement de l'outil de coupe O compatible avec une programmation hors ligne, réalisée à la pointe de l'outil (RTCP).

En outre, les mouvements du robot permettent de donner à l'effecteur 2 un mouvement de rotation autour de son axe, défini comme passant entre le centre de la rotule 11 et le centre de la bride de fixation la tête 81.

A titre indicatif, les dimensions Dx, Dy et Dz sont par exemple respectivement égales à 700 mm, 650 mm et 700 mm.

A titre indicatif également, la course C0 de l'outil de coupe qu'il est possible d'obtenir peut être de l'ordre de 100 mm, et la distance A entre centre de la rotule 11 et point d'écartement maximale de l'outil de coupe peut être égale à 250 mm.

Enfin, avec un outil de coupe de diamètre 20 mm, la capacité de charge à l'outil peut être de 100daN, dans le cas du premier mode de réalisation avec pied d'effecteur intégrant la liaison rotule. La capacité de charge peut être plus importante dans le cas du deuxième mode, i.e. dans le cas de reprise d'appui de l'effecteur sur plots sphériques 10.

Bien que non représentées, différentes motorisations sont solidaires respectivement du premier support 4, du deuxième support 6 et du châssis 8 de l'effecteur pour assurer respectivement la translation selon l'axe Z, selon l'axe X et selon l'axe Y.

Les inventeurs ont déjà défini les premiers éléments de dimensionnement pour un robot d'usinage pour lequel un effecteur selon l'invention conviendrait. Deux exemples de dimensionnement sont indiqués ci-après en relation avec des robots industriels déjà commercialisés.

Exemple 1 : La base du robot est un robot six axes, commercialisé sous la dénomination « Kuka KR 500 ».

La charge à l'outil de coupe d'environ 100 daN, est reprise par l'appui-plan 83 en contact avec la surface à usiner, qui doit être appliqué sur cette surface avec une force normale de 250 daN, en considérant un coefficient d'adhérence moyen de l'ordre de 0,4 pour éviter le glissement.

L'axe 6 du robot doit être à rattrapage de jeu et pré-chargé en cas d'usinage à broche verticale ou à broche horizontale.

Les réducteurs des axes 4 et 6 doivent donc être capables de reprendre un couple C correspondant à l'équation :

$$C = (\text{charge maxi à l'outil}) * (\text{distance maximale A entre centre de la rotule 11}$$

$$\text{et point d'écartement maximale de l'outil de coupe}).$$

On prend l'hypothèse que la rigidité des réducteurs est telle que, chargés par le couple C, le déplacement de la pointe de l'outil de coupe qui en résulte reste inférieur aux tolérances d'usinage, en ébauche ou en finition.

Ainsi, avec les données indicatives précédentes, le couple C des réducteurs doit être égal à 100 daN x 250 mm, soit 250 mN.

Exemple 2: La base du robot est un robot six axes commercialisé sous la dénomination « Staübli TX200 ».

En supposant un effort transmis par le robot sur l'appui de 100 daN, ce qui correspond à la capacité nominale du robot, la charge à l'outil doit rester inférieure à 40 daN, en tenant compte d'un coefficient d'adhérence de l'ordre 0, 4 et le couple de l'outil de coupe (broche) doit rester inférieur à 3,2 mN.

Ainsi, avec les données indicatives précédentes, les réducteurs des axes 4 et 6 doivent donc être capables de reprendre un couple C égal à 40 daN x 250 mm, soit 100 mN.

D'autres variantes et avantages de l'invention peuvent être réalisés sans pour autant sortir du cadre de l'invention.

En particulier, on peut en lieu et place d'un pied d'effecteur 80 en forme de calotte sphérique en appui contre des plots 10 de forme sphérique, réaliser un pied d'effecteur 80' en forme de tronc de cône qui peut venir également en appui contre un des plots sphériques 10 en définissant la liaison rotule 11 selon l'invention, comme montré en figure 5.

Cette variante de réalisation de la figure 5 est avantageuse car le tronc de cône du pied d'effecteur 80' est en appui contre chaque plot sphérique 10 selon une ligne.

## Revendications

1. Ensemble (1) d'usinage d'une surface, **caractérisé en ce qu'**il comprend :

    - un effecteur (2) comprenant :

        • une électro-broche (3) comprenant un corps (30) avec à l'une de ses extrémités des moyens d'accouplement à un outil de coupe (O),
        • un premier support (4) relié au corps (30) de l'électrobroche par une liaison glissière (5) autorisant une translation de l'électrobroche selon l'axe Z de rotation de l'outil,
        • un deuxième support (6) relié au premier support (4) par une liaison glissière (7) autorisant une translation du premier support selon un axe X perpendiculaire à l'axe Z de rotation de l'outil,
        • un châssis (8) dont l'une de ses extrémités constitue un pied (80) et l’autre de ses extrémités constitue une tête (81) adaptée pour être accouplée à l'extrémité libre d'un bras de robot, le châssis étant relié au deuxième support (6) par une liaison glissière (9) autorisant une translation du deuxième support selon un axe Y perpendiculaire à la fois à l'axe X de translation du premier support et à l'axe Z de translation de l'électrobroche et de rotation de l'outil ;

        - au moins un élément d'appui (10 ; 93) du pied de l'effecteur destiné à être agencé sur la surface à usiner ou sur un outillage qui supporte la surface, l'élément d'appui et le pied de l'effecteur étant configurés de telle sorte que l'effecteur est relié à la surface à usiner ou à l'outillage qui supporte la surface par une liaison rotule (11) lorsque le pied de l'effecteur est en appui.

2. Ensemble (1) selon la revendication 1, l'extrémité du pied (80) de l'effecteur étant constituée d'une rotule (82) montée à l'intérieur d'une pièce (83) en définissant entre elles la liaison rotule, la pièce (83) définissant une liaison d'appui contre la surface à usiner ou contre l'outillage.

3. Ensemble (1) selon la revendication 1, l'extrémité du pied (80) de l'effecteur étant conformée en une calotte sphérique, chaque élément d'appui étant un plot (10) en forme de calotte sphérique, destiné à être agencé sur la surface à usiner ou contre l'outillage, la forme du plot étant complémentaire de celle à l'extrémité du pied de l'effecteur en définissant la liaison rotule (11).

4. Ensemble (1) selon la revendication 1, l'extrémité du pied (80') de l'effecteur étant conformée en un tronc de cône, chaque élément d'appui étant un plot (10) en forme de calotte sphérique, destiné à être agencé sur la surface à usiner ou contre l'outillage, la forme du plot étant complémentaire de celle à l'extrémité du pied de l'effecteur en définissant la liaison rotule (11).

5. Ensemble (1) selon la revendication 3 ou 4 dans lequel chaque plot est destiné à être agencé contre l'outillage, l'ensemble (1) comprenant un ou plusieurs plots réalisé(s) intégralement avec l'outillage autour de la surface à usiner.

6. Ensemble (1) selon la revendication 3 ou 4, comprenant un ou plusieurs plots destinés à être posés sur la surface à usiner ou sur l'outillage autour.

7. Ensemble (1) selon l'une des revendications précédentes, l'amplitude angulaire de la liaison rotule (11) compris entre ± 10 et ± 45°, de préférence entre ± 15 et ± 25°.

8. Ensemble (1) selon l'une des revendications précédentes, le premier support (4) supportant le dispositif d'entraînement en translation selon l'axe Z, le deuxième support (6) supportant le dispositif d'entraînement en translation selon l'axe X, tandis que le châssis (8) supporte le dispositif d'entraînement en translation selon l'axe Y.

9. Ensemble (1) selon l'une des revendications précédentes, chaque dispositif d'entraînement en translation étant un moteur relié à un système vis-écrou à billes ou à un système de vis à rouleaux satellites.

10. Equipement d'usinage comprenant un robot à six de degré de liberté, dit robot six axes, et un ensemble (1) selon l'une des revendications précédentes, la tête (81) de l'effecteur (2) étant accouplée à l'extrémité libre du bras du robot six axes.

11. Procédé d'usinage d'une surface, mis en œuvre par l'équipement selon la revendication 10, dans lequel l'au moins un élément d'appui de l'effecteur est destiné à être agencé contre l'outillage, chaque élément d'appui du pied de l'effecteur étant un plot (10) en forme de calotte sphérique, la forme du plot étant complémentaire de celle à l'extrémité du pied de l'effecteur en définissant la liaison rotule (11), comprenant les étapes suivantes :

   a/ mesure du positionnement des centres des portées de chacun d'une pluralité de plots ;
   b/ intégration de la pluralité de plots sur l'outillage à mettre autour de la surface à usiner ;
   c/ appui du pied d'effecteur sur un des plots puis usinage de la partie de surface à proximité dudit plot, au moyen d'un outil de coupe accouplé à l'électrobroche, l'usinage étant réalisé avec déplacement de l'électrobroche en translation selon l'axe X et/ou Y et/ou Z et/ou avec rotation de l'effecteur autour du centre de la rotule et/ou avec rotation de l'effecteur autour de son axe passant par le centre de la rotule et le centre de la bride de fixation de la tête sur le bras du robot ;
   d/ déplacements successifs de l'effecteur au moyen du robot de sorte à réitérer l'étape c/ avec le pied d'effecteur en appui sur chacun de la pluralité des plots, afin de réaliser l'usinage souhaité de toute la surface.


**Patentansprüche**

1. Anordnung (1) zur Bearbeitung einer Oberfläche, **dadurch gekennzeichnet, dass** sie umfasst:

   - einen Effektor (2), umfassend:

      • eine Elektrospindel (3), die einen Körper (30) mit Mitteln zur Ankopplung an ein Schneidwerkzeug (O) an einem seiner Enden umfasst,
      • einen ersten Träger (4), der mit dem Körper (30) der Elektrospindel durch eine Gleitverbindung (5) verbunden ist, die eine Translation der Elektrospindel entlang der Drehachse Z des Werkzeugs ermöglicht,
      • einen zweiten Träger (6), der mit dem ersten Träger (4) durch eine Gleitverbindung (7) verbunden ist, die eine Translation des ersten Trägers entlang einer Achse X ermöglicht, die zur Drehachse Z des Werkzeugs senkrecht ist,
      • ein Gestell (8), bei dem eines seiner Enden einen Fuß (80) bildet und das andere seiner Enden ein Kopfstück (81) bildet, das dazu eingerichtet ist, an das freie Ende eines Roboterarmes angekoppelt zu werden, wobei das Gestell mit dem zweiten Träger (6) durch eine Gleitverbindung (9) verbunden ist, die eine Translation des zweiten Trägers entlang einer Achse Y ermöglicht, die gleichzeitig zur Translationsachse X des ersten Trägers und zur Translationsachse der Elektrospindel und Drehachse des Werkzeugs Z senkrecht ist;

   - wenigstens ein Abstützelement (10; 93) des Fußes des Effektors, das dazu bestimmt ist, auf der zu bearbeitenden Oberfläche oder auf einer Werkzeuganordnung, welche die Oberfläche trägt, angeordnet zu werden, wobei das Abstützelement und der Fuß des Effektors derart gestaltet sind, dass der Effektor mit der zu bearbeitenden Oberfläche oder mit der Werkzeuganordnung, welche die Oberfläche trägt, durch eine Kugelgelenkverbindung (11) verbunden ist, wenn sich der Fuß des Effektors abstützt.

2. Anordnung (1) nach Anspruch 1, wobei das Ende des Fußes (80) des Effektors aus einem Kugelgelenk (82) besteht, das im Inneren eines Teils (83) angebracht ist und dabei zwischen ihnen die Kugelgelenkverbindung bildet, wobei das Teil (83) eine Anlageverbindung an der zu bearbeitenden Oberfläche oder an der Werkzeuganordnung definiert.

3. Anordnung (1) nach Anspruch 1, wobei das Ende des Fußes (80) des Effektors in Form einer Kugelkalotte ausgebildet ist, wobei jedes Abstützelement ein Klotz (10) in Kugelkalottenform ist, der dazu bestimmt ist, auf der zu bearbeitenden Oberfläche oder an der Werkzeuganordnung angeordnet zu werden, wobei die Form des Klotzes komplementär zu derjenigen am Ende des Fußes des Effektors ist und dabei die Kugelgelenkverbindung (11) definiert.

4. Anordnung (1) nach Anspruch 1, wobei das Ende des Fußes (80') des Effektors in Form eines Kegelstumpfes ausgebildet ist, wobei jedes Abstützelement ein Klotz (10) in Kugelkalottenform ist, der dazu bestimmt ist, auf der zu bearbeitenden Oberfläche oder an der Werkzeuganordnung angeordnet zu werden, wobei die Form des Klotzes komplementär zu derjenigen am Ende des Fußes des Effektors ist und dabei die Kugelgelenkverbindung (11) bildet.

5. Anordnung (1) nach Anspruch 3 oder 4, wobei jeder Klotz dazu bestimmt ist, an der Werkzeuganordnung angeordnet zu werden, wobei die Anordnung (1) einen oder mehrere Klötze umfasst, die um die zu bearbeitende Oberfläche herum einstückig mit der Werkzeuganordnung ausgebildet sind.

6. Anordnung (1) nach Anspruch 3 oder 4, welche einen oder mehrere Klötze umfasst, die dazu bestimmt sind, auf die bearbeitende Oberfläche oder auf die Werkzeuganordnung darum herum gesetzt zu werden.

7. Anordnung (1) nach einem der vorhergehenden Ansprüche, wobei die Winkelamplitude der Kugelgelenkverbindung (11) zwischen $\pm 10$ und $\pm 45°$, vorzugsweise zwischen $\pm 15$ und $\pm 25°$ beträgt.

8. Anordnung (1) nach einem der vorhergehenden Ansprüche, wobei der erste Träger (4) die Vorrichtung zum Translationsantrieb entlang der Achse Z trägt und der zweite Träger (6) die Vorrichtung zum Translationsantrieb entlang der Achse X trägt, während das Gestell (8) die Vorrichtung zum Translationsantrieb entlang der Achse Y trägt.

9. Anordnung (1) nach einem der vorhergehenden Ansprüche, wobei jede Vorrichtung zum Translationsantrieb ein Motor ist, der mit einem Kugelumlaufspindelsystem oder mit einem Planetenrollengewindetrieb-System verbunden ist.

10. Bearbeitungseinrichtung, welche einen Roboter mit sechs Freiheitsgraden, Sechs-Achs-Roboter genannt, und eine Anordnung (1) nach einem der vorhergehenden Ansprüche umfasst, wobei das Kopfstück (81) des Effektors (2) an das freie Ende des Armes des Sechs-Achs-Roboters angekoppelt ist.

11. Verfahren zur Bearbeitung einer Oberfläche, das von der Einrichtung nach Anspruch 10 durchgeführt wird, wobei das wenigstens eine Abstützelement des Effektors dazu bestimmt ist, an der Werkzeuganordnung angeordnet zu werden, wobei jedes Abstützelement des Fußes des Effektors ein Klotz (10) in Kugelkalottenform ist, wobei die Form des Klotzes komplementär zu derjenigen am Ende des Fußes des Effektors ist und dabei die Kugelgelenkverbindung (11) definiert, die folgenden Schritte umfassend:

a/ Messung der Positionierung der Mittelpunkte der Auflageflächen jedes von mehreren Klötzen;
b/ Aufnahme der mehreren Klötze auf der Werkzeuganordnung, die um die zu bearbeitende Oberfläche herum anzubringen ist;
c/ Abstützung des Effektorfußes auf einem der Klötze, danach Bearbeitung des Oberflächenteils in der Nähe dieses Klotzes mittels eines Schneidwerkzeugs, das an die Elektrospindel angekoppelt ist, wobei die Bearbeitung mit translatorischer Bewegung der Elektrospindel entlang der Achse X und/oder Y und/oder Z und/oder mit Drehung des Effektors um den Mittelpunkt des Kugelgelenks und/oder mit Drehung des Effektors um seine Achse, die durch den Mittelpunkt des Kugelgelenks und den Mittelpunkt der Halterung zur Befestigung des Kopfstücks am Arm des Roboters verläuft, durchgeführt wird;
d/ aufeinander folgende Verlagerungen des Effektors mittels des Roboters, um Schritt c/ mit jeweils auf einem anderen der mehreren Klötze abgestützten Effektorfuß zu wiederholen, um die gewünschte Bearbeitung der gesamten Oberfläche durchzuführen.

**Claims**

1. Assembly (1) for machining a surface, **characterized in that** it comprises:

   - an effector (2) comprising:

      • an electric spindle (3) comprising a body (30) having, at one of its ends, means for coupling to a cutting tool (O),

• a first holder (4) connected to the body (30) of the electric spindle by a sliding connection (5) allowing the electric spindle to move in translation along the axis Z of rotation of the tool,

• a second holder (6) connected to the first holder (4) by a sliding connection (7) allowing the first holder to move in translation along an axis X perpendicular to the axis Z of rotation of the tool,

• a frame (8), one of the ends of which constitutes a foot (80) and the other of the ends of which constitutes a head (81) designed to be coupled to the free end of a robot arm, the frame being connected to the second holder (6) by a sliding connection (9) allowing the second support to move in translation along an axis Y perpendicular both to the axis X of translation of the first holder and to the axis Z of translation of the electric spindle and of rotation of the tool;

- at least one bearing element (10; 93) for the foot of the effector, intended to be arranged on the surface to be machined or on tooling that supports the surface, the bearing element and the foot of the effector being configured such that the effector is connected to the surface to be machined or to the tooling that supports the surface by a ball joint connection (11) when the foot of the effector is in contact.

2. Assembly (1) according to Claim 1, wherein the end of the foot (80) of the effector is made up of a ball joint (82) mounted inside a component (83), defining the ball joint connection therebetween, the component (83) defining a bearing connection against the surface to be machined or against the tooling.

3. Assembly (1) according to Claim 1, wherein the end of the foot (80) of the effector is in the shape of a spherical cap, each bearing element being a protrusion (10) in the form of a spherical cap, intended to be arranged on the surface to be machined or against the tooling, the shape of the protrusion being complementary to that at the end of the foot of the effector, defining the ball joint connection (11).

4. Assembly (1) according to Claim 1, wherein the end of the foot (80') of the effector is in the shape of a cone frustum, each bearing element being a protrusion (10) in the form of a spherical cap, intended to be arranged on the surface to be machined or against the tooling, the shape of the protrusion being complementary to that at the end of the foot of the effector, defining the ball joint connection (11).

5. Assembly (1) according to Claim 3 or 4, wherein each protrusion is intended to be arranged against the tooling, the assembly (1) comprising one or more protrusions made integrally with the tooling around the surface to be machined.

6. Assembly (1) according to Claim 3 or 4, which comprises one or more protrusions intended to be placed on the surface to be machined or on the surrounding tooling.

7. Assembly (1) according to one of the preceding claims, wherein the angular amplitude of the ball joint connection (11) is between $\pm$ 10 and $\pm$ 45°, preferably between $\pm$ 15 and $\pm$ 25°.

8. Assembly (1) according to one of the preceding claims, wherein the first holder (4) supports the device for driving in translation along the axis Z, the second holder (6) supports the device for driving in translation along the axis X, while the frame (8) supports the device for driving in translation along the axis Y.

9. Assembly (1) according to one of the preceding claims, wherein each device for driving in translation is a motor connected to a ball screw-nut system or to a planetary roller screw system.

10. Machining equipment comprising a robot with six degrees of freedom, known as a six axis robot, and an assembly (1) according to one of the preceding claims, the head (81) of the effector (2) being coupled to the free end of the arm of the six axis robot.

11. Method for machining a surface, implemented by the equipment according to Claim 10, wherein the at least one bearing element of the effector is intended to be arranged against the tooling, each bearing element of the foot of the effector being a protrusion (10) in the form of a spherical cap, the shape of the protrusion being complementary to that at the end of the foot of the effector, defining the ball joint connection (11), the method comprising the following steps:

a/ measuring the position of the centres of the bearing surfaces of each of a plurality of protrusions;
b/ integrating the plurality of protrusions on the tooling to be placed around the surface to be machined;

c/ bringing the effector foot into contact with one of the protrusions and then machining the surface part in the vicinity of said protrusion, by means of a cutting tool coupled to the electric spindle, the machining being effected by moving the electric spindle in translation along the axis X and/or Y and/or Z and/or with rotation of the effector about the centre of the ball joint and/or with rotation of the effector about its axis passing through the centre of the ball joint and the centre of the flange for fixing the head to the arm of the robot;

d/ successively moving the effector by means of the robot so as to repeat step c/ with the effector foot in contact with each of the plurality of protrusions, in order to effect the desired machining of the entire surface.

Fig. 1

Fig. 1A

Fig. 2

Fig. 3

Fig. 4

Fig. 5

## RÉFÉRENCES CITÉES DANS LA DESCRIPTION

**Documents brevets cités dans la description**

- US 20140227055 A
- DE 102009054604